# EUROPEAN PATENT APPLICATION

(11) **EP 3 078 544 A1**
(43) Date of publication of application: **12.10.2016**
(21) Application number: 15163030.8
(22) Date of filing: 09.04.2015
(51) Int. Cl.: B60P 7/08

(54) **AN ELONGATED SECURING RAIL**

(71) Applicant: Modul-System HH AB, 431 22 Mölndal (SE)
(72) Inventor: Carlsson, Anders, 422 50 HISINGS BACKA (SE); Thelander, Peter, 312 34 LAHOLM (SE)
(74) Representative: Awapatent AB

(57) **Abstract**

An elongated securing rail (13,214)for securing items in a back space or cargo space of a service vehicle, the elongated securing rail comprising: a bottom surface adapted to be arranged to a wall or a floor or a roof of the back space or cargo space of the service vehicle during use, a top surface adapted to face the inner space of the back space or cargo space of the service vehicle during use and the top surface is arranged at a distance from the bottom surface, and at least a first lateral side connecting the top surface with the bottom surface, wherein the elongated securing rail is characterized by: a first connection tab (21) at the first lateral side, the first connection tab being provided with a first engagement portion (32), wherein the first connection tab on the first lateral side is adapted to overlap a portion of an item, and the first engagement portion of the first connection tab is adapted to be connected to a matching engagement portion of the item, preventing, in at least one geometrical plane, relative movement between the elongated securing rail and the item.

## Description

### Field of the invention

The present invention relates to an elongated securing rail for securing items, such as panels or equipment, in a cargo or back space of a service vehicle.

### Technical background

It is common practise in the art of service vehicles to equip a cargo space or a back space of an automotive vehicle with for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the cargo space of the vehicle is provided with a floor, usually made of wood, but the floor might also be made of for example an artificial, plastic material. The vehicle may also be supplied with wall panels covering the inner walls of the vehicle.The floor is usually loosely placed on the floor or fastened to the floor of the cargo space by fasteners, for example, screws which are screwed into the underlying floor or connected to a fastener, for example a ring fastener which is permanently installed in the cargo or back space of the service vehicle. This floor functions as a good support to work, stand and walk upon and is also used as an anchor plate for the module units.

Usually a floor is individually made for a specific vehicle model, i.e. the floor is adapted to the length and the width of the vehicle.

One example of such a floor system is disclosed in EP1894774, of the present applicant, which discloses a load securing system, for a cargo space in an automotive vehicle. At least two rails are fixable along the cargo space, wherein one of said rails is held by one or more fixing means connectable to respective ring fasteners of the service vehicle and the other rail is held as well by one or more fixing means connectable to respective ring fasteners, and said rails are connected to each other by a bridging element in a space between said rails.

However, there is still a need for a more flexible solution which can be used for all kind of back spaces and cargo spaces of a service vehicle and which is easy and quick to install, safe and yet flexible in order to enable securing various sizes and different shapes of module units.

### Summary of the Invention

The object of the present invention is to provide an elongated securing rail that overcomes the above issues. The present invention relates to an elongated securing rail for securing items in a back space or cargo space of a service vehicle, the elongated securing rail comprising: a bottom surface adapted to be arranged to a wall or a floor or a roof of the back space or cargo space of the service vehicle during use, a top surface adapted to face the inner space of the back space or cargo space of the service vehicle during use and the top surface is arranged at a distance from the bottom surface, and at least a first lateral side connecting the top surface with the bottom surface, wherein the elongated securing rail is characterized by: a first connection tab at the first lateral side, the first connection tab being provided with a first engagement portion, wherein the first connection tab on the first lateral side is adapted to overlap a portion of an item, and the first engagement portion of the first connection tab is adapted to be connected to a matching engagement portion of the item, preventing, in at least one geometrical plane, relative movement between the elongated securing rail and the item.

Having an elongated securing rail for securing items in a back space or cargo space is advantageous since it increases the modularity when fitting items in the back space or cargo space of a service vehicle. Items may be floor panels, wall panels, roof panels, storage means such as cupboards or boxes but may also be tools or equipment as well as any other type of item often found in a service vehicle. It may further be possible to use the item securing system as a part of the side of a cupboard. The elongated securing rail comprises of a bottom and a top surface. The bottom surface is intended to be arranged to an inner surface such as an inner wall or a floor of a back space or cargo space of a service vehicle. The elongated securing rail further comprises a top surface intended to be facing the inner volume of the back space or cargo space of the service vehicle. Facing the inner volume may also be described as the top surface, having a normal, and that said normal is pointing in a direction away from the bottom surface of the elongated securing rail. The top surface is arranged at a distance from the bottom surface and a first lateral side is connecting the bottom surface with the top surface.

Arranged to the first lateral side is a first connection tab. The first connection tab may be provided with a first engagement portion. The first connection tab is arranged to be connected to a matching engagement portion of an item, preventing, in at least one geometrical plane, relative movement between the elongated securing rail and the item. This provides a flexible, safe and simple way of connecting items to the elongated securing rail, and subsequently provides increased modularity when fitting items such as panels, tools or interior equipment to the back space or cargo space of a service vehicle. Once the elongated securing rail has been arranged to an inner surface or an inner wall of the service vehicle other items may be connected to the elongated securing. This creates an easy-to-install way of outfitting a service vehicle with for instance floor or wall panels.

The top surface of the elongated securing rail may be located in a plane P. When the first connection tab overlap and connect to a matching engagement portion of an item the elongated securing rail and the item are prevented from moving in relation to each other in at least one geometrical plane. The elongated securing rail and the item may be described as being interlocked along a first and second axis and at least in one direction along a third axis. The first axis may be described as being a first axis parallel to the plane P, the top surface is located in. The second axis may be described as being an axis perpendicular to the first axis, also parallel to the plane P. The third axis may be be an axis parallel to a normal of the top surface, perpendicular to the plane P, of the top surface of the elongated securing rail. When relative movement is prevented, along at least one geometrical plane, the elongated securing rail and the item may be described as being interconnected or interlocked such as to prevent, in at least one geometrical plane, translation movement between the item and the elongated securing rail. The elongated securing rail and the item are prevented from sliding apart in a direction perpendicular or essentially perpendicular to the first lateral side. The elongated securing rail and the item are also prevented from sliding in relation to each other along the first lateral side. When the second connection tab is arranged adjacent the bottom surface the item does not move in relation to the elongated fastening rail when for instance a person steps on the floor. Stepping on the floor may be replaced with any load exerting a downward force to the item or the elongated securing rail. When the first connection tab is arranged close to or forms a part of the surface and the second connection tab close to or forms part of the bottom surface, such that an item is overlapped and arranged between the first and second connection tab movement between the item and the elongated securing rail is prevented in both directions along the third axis.

The interlocking or interconnecting between an item and the elongated securing rail still allows for the connection between the item and elongated securing rail to be disassembled by a movement comprising combined translation and rotation between the item and the elongated securing rail. This combined translation and rotation may be needed in order to be able to assemble the connection between an item and the elongated securing rail in a simple manner.

If the first and second connection tabs would be designed as being rectangular, protrusions, protruding outwardly from the first lateral side, close to the top or bottom surface of the elongated securing rail the directions of the first, second and third axis's may be described such that that the first axis is preferably extending in a direction essentially perpendicular to the first lateral side of the floor panels. The second axis may be defined as being an axis perpendicular to the first axis and essentially being parallel to a lateral side being adjacent to the first lateral side, of the elongated securing rail. The third axis may be defined as being normal to the top surface of the elongated securing rail and perpendicular to the first and second axis. Along an axis may also be described as in one or both directions defined by an axis. The geometrical plane may thus be described as a plane defined by the first axis and the second axis. The first engagement portion of the first connection tab is arranged to provide and increase interlocking safety when the elongated securing rail is connected to an item. The first engagement portion ensures that an item is not loosened from the elongated securing rail by accidents, vibrations or fatigue by providing an interlocking function against the item. The elongated securing rail has an essentially rectangular shape extending in the elongated direction. The number of connection tabs on the elongated securing rail depends on the length and size of the elongated securing rail and may be adapted to the size of the floor panels. The first connection tab, has a tab like shape extending outwardly from the first lateral side of the elongated securing rail. It may further have an essentially rectangular shape, a semi round shape or a triangle shape. The elongated securing rail is preferably made from a metal such as aluminium or an aluminium alloy. The elongated rail may thus be manufactured by being extruded and subsequently tooled using appropriate tools. The elongated securing rail may also be made from a sheet metal being shaped and subsequently tooled into the wanted shape. It may also be possible to cast the elongated securing rail from molten metal. Further the elongated securing rail may also be made from a plastic material or a plastic composite material or other polymeric materials. The elongated securing rail may also comprise an undercut groove for attaching further items or equipment to the elongated securing rail. This further increase the modularity and flexibility of the elongated securing rail and will be further described in detail in the application. Further the elongated securing rail may be manufactured in one material, as one single body. The elongated securing rail may be made as an assembly comprising multiple parts in the case when for instance the material choice and the shape make it difficult to produce the elongated securing rail as one single body. The elongated securing rail may be attached to a surface by means of adhesives or by fastening means such as a screw, or a nut and a bolt or the like.

According to at least one exemplary embodiment of the present invention, the invention further comprises a second connection tab adjacent to the first connection tab at the first lateral side, the first connection tab is arranged close to or forms part of the top surface of the elongated securing rail and the second connection tab is arranged close to or forms part of the bottom surface of the elongated securing rail, or the second connection tab on the elongated securing rail is arranged close to or forms part of the top surface of the elongated securing rail and the first connection tab on the elongated securing rail is arranged close to or forms part of the bottom surface of the elongated securing rail. Arranged adjacent the first connection tab, on the first lateral side, is a second connection tab. This is advatageous since arranging the first connection tab close to or forms part of the top surface and the second connection tab close to or forms part of the bottom surface of the elongated securing rail enables an item to be overlapped by both the connection tabs at the same time. This results in that the movement between the elongated securing rail and the item is prevented along at least one axis. In combination with the first engagement portion arranged to the first connection tab, locking movement along a first axis, the item may be further interlocked along a third axis.The same applies to the third and fourth locking tabs which may also be arranged in the same way. When the first or the second connection tabs are arranged close to or forms part of the surface of the elongated securing rail the tabs may also be described as being an extension of the top surface forming an overhang projecting outwardly from the top surface. Having the first or second connection tabs arranged close to or forms part of the bottom surface of the elongated securing rail is advantageous since the connection tabs may even form part of the bottom surface of the elongated securing rail. When the elongated securing rail is in use the tabs will be in contact with surface of the wall, floor or inner roof the elongated rails is arranged to. A force acting on a connection tab arranged close to or forms part of the bottom surface of the elongated securing rail will then be directly transferred to the surface of the wall, floor or roof. This enables the connection tabs to be manufactured requiring less material, being a more cost efficient solution.

According to at least one exemplary embodiment of the present invention the first engagement portion on the first connection tab of the elongated securing rail is a protrusion which extends in a direction towards the bottom surface or the top surface of the elongated securing rail. It is advantageous to have the first engagement portion of the first connection tab of the elongated securing rail protruding in a direction away from the surface of the elongated rail that the first connection tab is arranged close to or forms part of. The first engagement portion may thus always point in direction towards an item being ovelapped by the first connection tab. This enables the first engagement portion to engage the item being connected to the elongated securing rail.

According to at least one exemplary embodiment of the present invention the first engagement portion on the first connection tab of the elongated securing rail is a groove which extends in a direction along the first lateral side of the elongated securing rail. When the first engagement portion is in the shape of a groove the groove may as in the case with the first engagement portion being a protrusion be facing an item when the elongated securing rail is connected to and overlap an item. The groove is an alternative to having a protrusion for instance when the elongated securing rail comprises materials which make it costly to produce a protrusion in relation to a groove. This also increases the possibilities where you might want to create two systems for connecting items and you do not want items from a first system to be connectable to items from a second system. For instance when you want two systems one for use when flooring and another one when paneling an inner roof of a cargo space or a back space of a service vehicle. This increases the security and minimizes the room for faults when installing a system comprising an elongated securing rail and items.

According to at least one exemplary embodiment of the present invention the elongated securing rail comprises at least two first connection tabs at the first lateral side, and the second connection tab is arranged between the two first connection tabs, wherein a recess extends from the top surface or the bottom surface to the second connection tab between the two first connection tabs, wherein the recess is adapted to receive and overlap a portion of an item and prevent, in at least one geometrical plane, relative movement between the elongated securing rail and the item. When two first connection tabs are arranged with a second connected tab in between a recess is extending from the top surface or the bottom surface to the second connection tab between the two first connection tabs. The recess is adapted to receive and overlap a portion of an item and prevent, in at least one geometrical plane, relative movement between the elongated securing rail and an item. The arrangement and the shape of the first and second connection tabs enables the connection tabs to connect to and prevent, in at least one geometrical plane, relative movement to an item. This increases the locking and security of the connection between an elongated securing rail and an item.

According to at least one exemplary embodiment of the present invention the elongated securing rail comprises at least two second connection tabs at the first lateral side, and the first connection tab is arranged between the two second connection tabs, wherein a recess extends from the top surface or the bottom surface to the first connection tab between the two second connection tabs, wherein the recess is adapted to receive and overlap a portion of an item and prevent, in at least one geometrical plane, relative movement between the elongated securing rail and the item. When two second connection tabs are arranged with a first connected tab in between a recess is extending from the top surface or the bottom surface to the first connection tab between the two second connection tabs. The recess is adapted to receive and overlap a portion of an item and prevent, in at least one geometrical plane, relative movement between the elongated securing rail and an item. The arrangement and the shape of the first and second connection tabs enables the connection tabs to connect to and prevent, in at least one geometrical plane, relative movement to an item. This increases the locking and security of the connection between an elongated securing rail and an item.

According to at least one exemplary embodiment of the present invention the item is a first item, and the elongated securing rail further comprises a second lateral side comprising a third connection tab at the second lateral side, and a fourth connection tab at the second lateral side, the fourth connection tab being provided with a second engagement portion, wherein the third and fourth connection tabs on the second lateral side are adapted to overlap a portion of a first item, and wherein the second engagement portion of the second connection tab is adapted to be connected to a matching engagement portion of a second item, preventing relative movement between the elongated securing rail and the second item. Having the elongated securing rail comprising a second lateral side comprising a third and fourth connection tabs is advantageous since it enables the elongated securing rail to be connected two an item on either side of the elongated securing rail. This creates the possibility of having items such as floor panels being connected with an elongated securing rail in between every two floor panels. This increases the flexibility when fitting equipment to the back space or cargo space of a service vehicle since it creates additional anchor points for attaching equipment or items.

According to at least one exemplary embodiment of the present invention the fourth connection tab is arranged close to or forms part of the top surface of the elongated securing rail and the third connection tab is arranged close to or forms part of the bottom surface of the elongated securing rail, or the third connection tab on the elongated securing rail is arranged close to or forms part of the top surface of the elongated securing rail and the fourth connection tab on the elongated securing rail is arranged close to or forms part of the bottom surface of the elongated securing rail. This is advatageous since arranging the fourth connection tab close to or forms part of the top surface and the third connection tab close to or forms part of the bottom surface of the elongated securing rail enables an item to be overlapped by both the connection tabs and as such the movement between the elongated securing rail and the item is prevented along at least one axis. When the third or the fourth connection tabs are arranged close to or forms part of the surface of the elongated securing rail the tabs may be also be described as being an extension of the top surface forming an overhang projecting outwardly from the top surface. Having the third or fourth connection tabs arranged close to or forms part of the bottom surface of the elongated securing rail is advantageous since the connection tabs thereby may form part of the bottom surface of the elongated securing rail. When the elongated securing rail is in use the tabs may be in contact with surface of the wall, floor or inner roof the elongated rails is arranged to. A force acting on a connection tab arranged close to or forms part of the bottom surface of the elongated securing rail will then be directly transferred to the surface of the wall, floor or roof. This enables the connection tabs to be manufactured requiring less material, being a more cost efficient solution.

According to at least one exemplary embodiment of the present invention the second engagement portion on said third connection tab of said elongated securing rail is a groove in said third connection tab. This is advantageous since the second securing groove on the third connection tab of the elongated securing rail is adapted to be interlocked with the first engagement portion of the first connection tab of an elongated securing rail. This enables two elongated securing rails to be interconnected to each other. Further when an item comprises a third connection tab adapted to be connected to a first connection tab of an elongated securing rail, the first engagement portion of the elongated securing rail will connect to and interlock to the second engagement portion of the item being a groove.

According to at least one exemplary embodiment of the present invention the elongated securing rail comprises at least two fourth connection tabs at the second lateral side, and the third connection tab is arranged between the two fourth connection tabs, wherein a recess extends from the top surface or the bottom surface to the third connection tab between the two fourth connection tabs, wherein said recess is adapted to receive and overlap a portion of an item and prevent, in at least one geometrical plane, relative movement between the elongated securing rail and the item. When two fourth connection tabs are arranged with a third connected tab in between a recess is extending from the top surface or the bottom surface to the third connection tab between the two fourth connection tabs. The recess is adapted to receive and overlap a portion of an item and prevent, in at least one geometrical plane, relative movement between the elongated securing rail and an item. The arrangement and the shape of the fourth and third connection tabs enables the connection tabs to connect to and prevent, in at least one geometrical plane, relative movement to an item. This increases the locking and security of the connection between an elongated securing rail and an item.

According to at least one exemplary embodiment of the present invention the elongated securing rail comprises at least two third connection tabs at the second lateral side, and the fourth connection tab is arranged between the two third connection tabs, wherein a recess extends from the top surface or the bottom surface to the fourth connection tab between the two third connection tabs, wherein the recess is adapted to receive and overlap a portion of an item and prevent, in at least one geometrical plane, relative movement between the elongated securing rail and the item. When two third connection tabs are arranged with a fourth connected tab in between a recess is extending from the top surface or the bottom surface to the fourth connection tab between the two third connection tabs. The recess is adapted to receive and overlap a portion of an item and prevent, in at least one geometrical plane, relative movement between the elongated securing rail and an item. The arrangement and the shape of the fourth and third connection tabs enables the connection tabs to connect to and prevent, in at least one geometrical plane, relative movement to an item. This increases the locking and security of the connection between an elongated securing rail and an item.

According to at least one exemplary embodiment of the present invention the first and second connection tabs are alternately disposed along the first lateral side of the elongated securing rail and the third and fourth connection tabs are alternately disposed along the second lateral side of the elongated securing rail. Alternately disposing first and second connection tabs along the first lateral side is advantageous since it distributes the forces acting on the connection along the lateral side. It creates a securer and better connection between an elongated securing rail and an item.

The present invention also relates to an item securing system comprising and elongated securing rail, and an item, the item comprising: at least one third and fourth rail connection tabs, arranged on a second lateral side of the item, wherein the third and fourth rail connection tabs on the item matches the first and second connection tab on the elongated securing rail and are adapted to being connected to the first and second connection tab on the elongated securing rail, for preventing relative movement between the elongated securing rail and the item. It is advantageous to have the item arranged to be fitted to the elongated securing rail with matching third and fourth rail connection tabs. The first connection tab on the elongated securing rail is adapted to be connected to the third rail connection tab on the item to be connected, and a second connection tab on the elongated securing rail is adapted to be connected to a fourth rail connection tab on the item to be connected.

The present invention also relates to an item securing system comprising an item, the item comprising: at least one first and second rail connection tab, arranged on a first lateral side of the item, wherein the first and second rail connection tabs on the item matches the third and fourth connection tab on the elongated securing rail and are adapted to being connected to the third and fourth connection tab on the elongated securing rail, for preventing relative movement between the elongated securing rail and the item. It is advantageous to have the item arranged to be fitted to the elongated securing rail with matching first and second rail connection tabs. The third connection tab on the elongated securing rail is adapted to be connected to the first rail connection tab on the item to be connected, and a fourth connection tab on the elongated securing rail is adapted to be connected to a second rail connection tab on the item to be connected.

According to at least one exemplary embodiment of the present invention the item is a panel such as a floor panel or a wall panel. As has already been described the item to be connected to the elongated securing rail is often a panel such as a floor panel or a wall panel. Fastening floor panels often require the use of fastening means such as a screw being directly screwed into the floor of the vehicle. This creates a hole in the metal of the floor with problems that may include corrosion or a weakening of the floor. By having an elongated securing rail arranged and fastened to the inner floor or inner wall of the service vehicle by means of adhesive these problems may be avoided.

According to at least one exemplary embodiment of the present invention the first and second connection tabs of said elongated securing rail are arranged at a distance from each other. The first and second connection tabs may be arranged at a distance from each other in a direction being parallel to the direction from the bottom surface to the top surface of the elogated securing rail. The first and second connection tabs may also be arranged at a distance from each other along the first lateral side of the rail. This is adventageous since by having the first and second conneciton tabs arranged at a distance from each other the number of connection tabs needed may be reduced. This may be the case when connecting the elongated securing rail to items and the demands on the connection is reduced. This may be the case when for instance roof panels are connected to the elongated securing rail since no further heavy items are to be attached to the roof panels.

According to at least one exemplary embodiment of the present invention the first and second connection tabs of the elongated securing rail are connected to each other at their aidjacent sides. When the demands on the connection between an item and the elongated securing rail is high the first and second connection tabs, or the third and fourth connection tabs, may be connected to each other along their adjacent sides. Connecting the connecting tabs increases the strength of a tabs which reduces the risk of connection tabs failing by breaking apart from the lateral side of the elongated securing rail.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief Description of Drawings

The above, as well as additional objects, features and advantages of the present disclosure, will be better understood through the following illustrative and non-limiting detailed description of exemplary embodiments of the present disclosure, with reference to the appended drawings, where the same reference numerals will be used for similar elements, wherein:
Fig. 1 shows a back space of a cargo vehicle having an elongated securing rail used to interconnect and fasten floor panels to an inner floor.
Fig. 2 shows back space of a cargo vehicle having an elongated securing rail used to interconnect wall panels arranged on an inner wall.
Fig. 3 shows a partial view of an elongated securing rail, in a perspective view from above.
Fig. 4 shows a partial view of an elongated securing rail, in a second perspective view from above.
Fig. 5 shows a partial view of the elongated securing rail, in a perspective view from below.
Fig. 6 shows a cross section of the elongated securing rail Fig. 5.
Fig. 7 shows a panel securing system comprising three identical floor panels and one elongated securing rail, wherein two floor panels are interconnected to the elongated securing rail, and two floor panels are interconnected to each other.
Fig. 8 shows a perspective view of a floor comprising floor sections.

### Detailed Description of the Invention

The present invention will now be described in more detailed with the accompanying drawings. The present invention will disclose two possible uses of the elongated securing rail, one for fastening floor panels and one for fastening wall panels, however the same system may be used for fastening roof panels as well as panels for covering cupboards or other items often fitted to the back space or cargo space of a service vehicle.

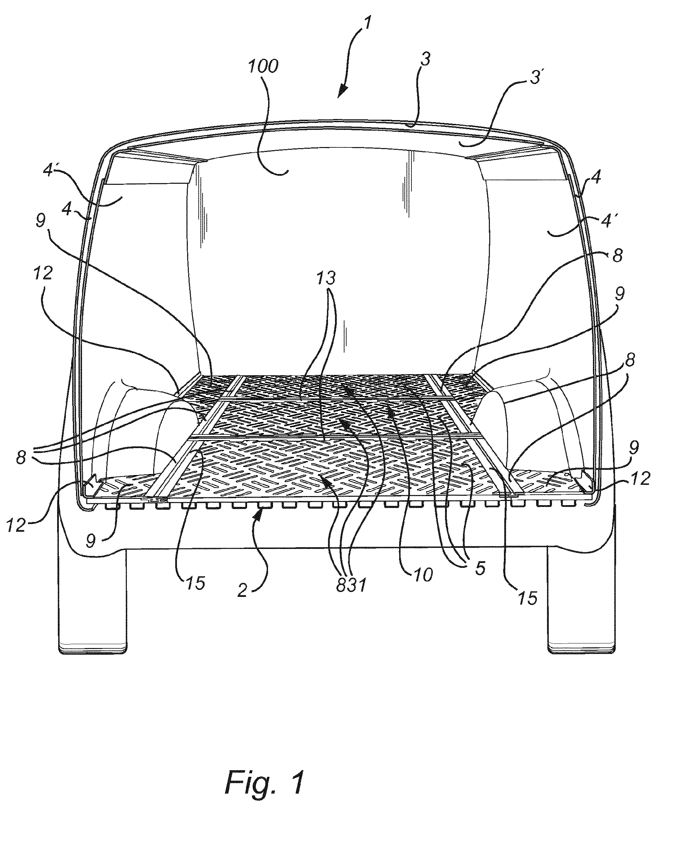

Fig.1 shows a back space or cargo space 100 of a service vehicle 1. The back space or cargo space 100 of the service vehicle comprises a floor 2, a roof 3, inner walls 4 and a trunk or boot door (not visible) at the back. When in use the back space or cargo space 100 may be fitted with items such as storing equipment as well as interior panels i.e. for covering floors or walls. The roof 3 and the inner walls 4 are covered by interior panels 3' and 4'.

The interior panels 3', 4' may also be used for fastening storing equipment or for fastening tools or the like (not visible). The back space or cargo space 100 is fitted with an interior floor, i.e. in this case a floor panel system 10, comprises floor panels sections 813 arranged on top of, and covering, the back space or cargo space floor 2. The floor panel sections 813, comprises fastening rails 8 on two opposing sides of a floor panel 5. The fastening rails are arranged such that they are extending along an edge of the floor panels, parallel to the forward driving direction of the vehicle. Shown are also two elongated securing rails 13 interconnecting the floor panels 5 forming a floor 10. The elongated securing rails 13 are arranged transversal to the driving direction of the vehicle 1 and the fastening rails 8. The floor panels 5 each have a rectangular shape with the shorter sides 15 being parallel to the fastening rails 8. The interconnecting between the elongated securing rails 13 and floor panels 5 is done along their longest side. Along the shorter sides 15 of the floor panels 5, the floor panels 5 are connected to fastening rails 8. The figure shows a total of six fastening rails 8, wherein each floor panel 5 on each short side 15 is fastened to a fastening rail 8. Each floor panel 5 can be seen as being arranged between and fastened to two fastening rails 8 and one elongated securing rails13. Both type of rails 8, 13 may be fastened to the floor 2 of the vehicle by fastening means such as adhesives or screws and bolts (not shown). Depending on the width and length of the back space or cargo space 100 to be floored, as well as the dimension of each floor panel 5, a different number of floor panels 5 may be needed to cover the whole floor 2. Both types of rails 8 and 13 may hold the floor panels 5 in place as well as serve as securing means (not shown) for fastening module units such as tools, equipment and interior storage elements to the back space or cargo space 100 of the service vehicle 1. Floor elements 9 are arranged on the sides of the back space or cargo space 100 of the vehicle 1, adjacent the inner wall 4, and they may be made from floor panels 5 cut into a shape, for fitting in a specific vehicle. This means that one type of floor panel 5 may be used for flooring the centre part of the back space or cargo space 100 of a service vehicle 1. The floor elements 9 on the side may be made model specific i.e. be made to fit on only a specific vehicle model. Fig.1 further shows angular fastening elements 12 for fastening of the floor elements 9 to an adjacent inner wall 4.

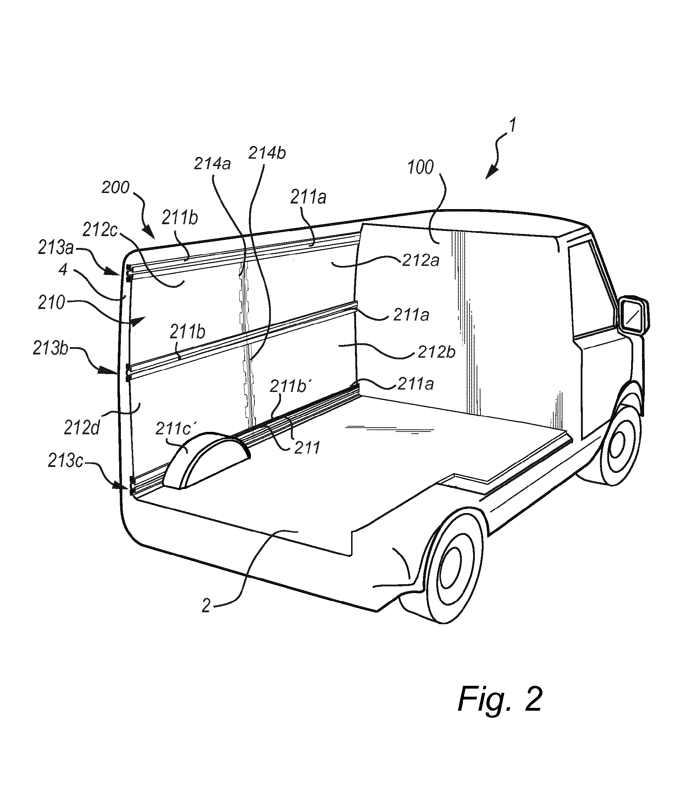

Fig. 2 shows a view of a back space or cargo space 100 of a service vehicle 1 having wall panels 212a, 212b, 212c, 212d fitted to an inner wall 4 of the vehicle 1. Wall panels 212a, 212b, 212c, 212d are arranged to the inner wall 4 of the back space or cargo space 100 of the service vehicle 1. Shown is a system of several wall panel fastening rails 211, 211 a, 211 b, 211b', 211c', several wall panels 212a, 212b, 212c, 212d and elongated securing rails 214 interconnecting pairs of wall panels 212a, 212b, 212c, 212d together. The rails 211, 214 are attached to the inner wall 4 of the vehicle 1, i.e. to the inner wall 4 of the back space or cargo space 100 of the service vehicle 1. The wall panel fastening rails 211 are orientated in the main forward driving direction of the service vehicle 1 i.e. in the longitudinal direction of the vehicle 1. The elongated securing rails 214 are arranged transversely or partly transversely in relation to the forward direction of the service vehicle 1 and the wall panel fastening rails 211. The wall panel fastening rails 211 are comprised in different sets of wall panel fastening rails 211, a first set 213a, a second set 213c, and a third set 213b of wall panel fastening rails 211. The first set of fastening rails 213a is arranged in the upper part of the back space or cargo space 100 and it comprises of two wall panel fastening rails 211, a first wall panel fastening rails 211 a and a second wall panel fastening rails 211b.The second set of wall panel fastening rails 213c comprises of three wall panel fastening rails 211 a, 211b', 211c'. The third set of wall panel fastening rails 213b is arranged in between the first set and the second set of wall panel fastening rails 213a, 213b, and it comprises of two wall panel fastening rails 211, a first wall panel fastening rails 211 a and a second wall panel fastening rails 211 b. The wall panel fastening rails 211 of each set of wall panel fastening rails 213 are arranged in a substantially straight line one after the other. Alternatively, instead of having two or three wall panel fastening rails 211 arranged such that a rectilinear track is formed, there may be more or only one wall panel fastening rail 211 in each set of wall panel fastening rails 213. The length of the wall panel fastening rail 211, in a set of wall panel fastening rails 213, may be the same or differ.

A first wall panel 212a is arranged to the inner wall 4 by arranging it between the first wall panel fastening rail 211 a of the first set of wall panel fastening rails 213a and the first wall panel fastening rail 211 a of the third set of wall panel fastening rails 213b, by having an upper portion of the wall panel 212a arranged to the first wall panel fastening rail 211 a of the first set of wall panel fastening rails 213a and a lower portion arranged to the first wall panel fastening rail 211 a of the third set of wall panel fastening rails 213b.

A second wall panel 212b is arranged to the inner wall 4 by arranging it between the first wall panel fastening rail 211 a of the third set of wall panel fastening rails 213b and the first wall panel fastening rail 211 a of the second set of wall panel fastening rails 213c, by having an upper portion of the wall panel 212b arranged to the first wall panel fastening rail 211 a of the third set of wall panel fastening rails 213b and a lower portion arranged to the first wall panel fastening rail 211 a of the second set of wall panel fastening rails 213c.

A third wall panel 212c is arranged to the inner wall 4 by arranging it between the second wall panel fastening rail 211 b of the first set of wall panel fastening rails 213a and the second wall panel fastening rail 211 b of the third set of wall panel fastening rails 213b, by having an upper portion of the wall panel 212c arranged to the second wall panel fastening rail 211 b of the first set of wall panel fastening rails 213a and a lower portion arranged to the second wall panel fastening rail 211 b of the third set of wall panel fastening rails 213b.

A fourth wall panel 212d is arranged to the inner wall 4 by arranging it between the second wall panel fastening rail 211 b of the third set of wall panel fastening rails 213b and the second wall panel fastening rail 211b' and the third wall panel fastening rail 211c' of the second set of wall panel fastening rails 213c, by having an upper portion of the wall panel 212d arranged to the second wall panel fastening rail 211 b of the third set of wall panel fastening rails 213b and a lower portion arranged to the second wall panel fastening rail 211 b' and the third wall panel fastening rail 211 c' of the second set of wall panel fastening rails 213c.

The wall panels 212a-212d are seen as having a rectangular shape but the shape may be different depending on the size and shape of the back space or cargo space 100 of the vehicle 1.

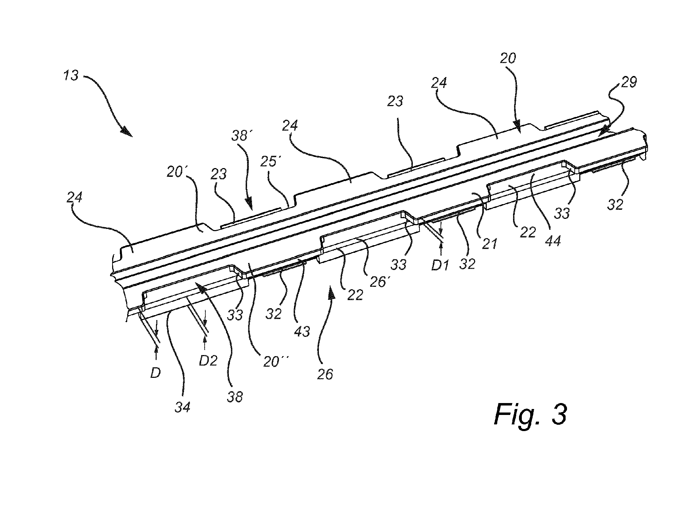

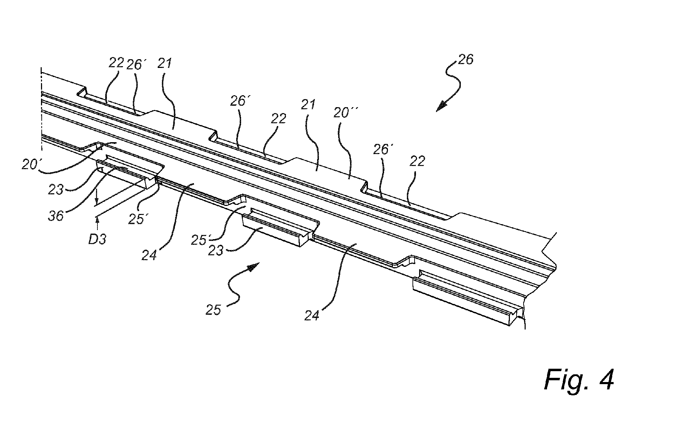

The elongated securing rail 214a and 214b connects a first wall panel 212a to a third wall panel 212c, and a second wall panel 212b to a fourth wall panel 212d. The elongated securing rails 214 are attached to the inner wall 4 of the service vehicle 1. Once the elongated securing rail 214 have been attached to the inner walls 4 the elongated securing rail 214 may be used for securing wall panels 212a-212d, to the inner wall 4 of the service vehicle 1. The elongated securing rails 214 may be attached to the inner wall 4 by using adhesives or other fastening means such as screws, nuts and bolts or rivets (not shown). The wall panel fastening rails 211 may also be fastened or secured to the inner wall 4 by means of adhesives. The elongated securing rails 214 comprise connection tabs which are designed to help secure and fasten wall panels 212 to the elongated securing rail 214. This is further described in connection with Fig. 3 and Fig. 4. The elongated securing rails 214 can be seen as having connection tabs arranged on either side facing an edge of a wall panel 212a to 212d. The connection tabs are adapted to be connected to matching rail connection tabs of a wall panel 212 and prevent relative movement between wall panels 212 and the elongated securing rail 214. The elongated securing rails 214 can be used to fasten other items, for example module units such as cupboards, interior storage equipment, load securing eyelets or tools (not shown).

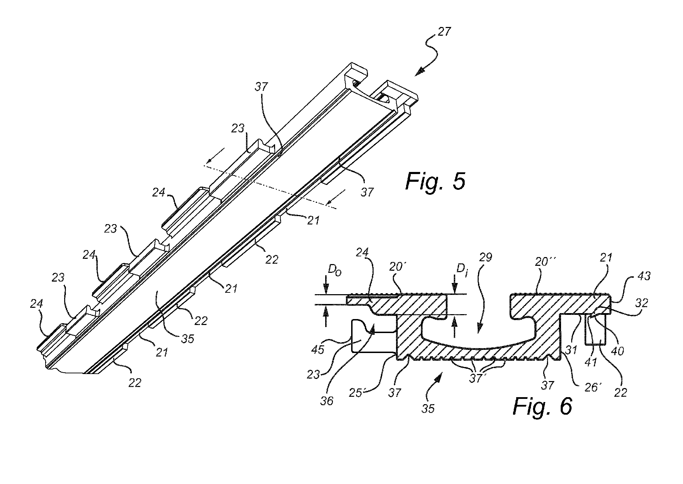

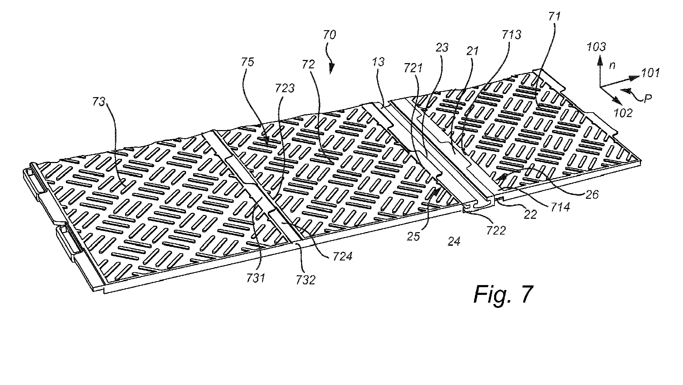

Fig. 3-5 show partial perspective views of the elongated securing rails 13 in Fig. 1, and Fig. 6 shows a cross section of the elongated securing rail 13 shown in Fig. 3-5 and will hence be described together. The elongated securing rail 13 has a top surface 20 formed by two top surfaces portions 20' and 20" which are located in a plane P (see Fig. 7) having a normal, n, pointing away from the inner floor, roof or inner walls 2, 3, 4, of the back space or cargo space 100 of the service vehicle 1 to which an elongated securing rail 13 is to be arranged to. The elongated securing rail 13 comprises a first and a second lateral side 26, 25, which are arranged opposite each other. The elongated securing rail 13 further comprises a third lateral side 27 and a fourth lateral side (not shown) which are arranged opposite each other. At the first and the second lateral sides are connection tabs 21, 22, 23, 24 arranged. On the first lateral side 26 is a first lateral side wall 26'. A first connection tab 21 protrudes outwardly from said first lateral sidewall 26' of the elongated securing rail 13. Adjacent the first connection tab 21 is a second connection tab 22. Adjacent the second connection tab 22 is a second first connection tab 21. The second connection tab 22 protrudes outwardly from the first lateral sidewall 26' of the elongated securing rail 13. The first and second connection tabs 21, 22 protrude essentially parallel to the top surface 20. In this example the first connection tab 21 forms a part of the top surface 20, i.e. extends in the plane P, (see Fig. 7.) However the first connection tab 21 may also be arranged close to the top surface 20. In this example the second connection tab 22 is arranged close to the bottom surface 35, of the elongated securing rail 13. The second connection tab is extending parallel to, and spaced apart from, the plane P, and the first connection tab 21. The first and second connection tabs 21, 22 are arranged in an alternate pattern so that adjacent a first connection tab 21 is a second connection tab 22. The number of first and second connection tabs 21, 22 depends on the size and length of the elongated securing rail 13 as well as the size of the connection tabs 21, 22, 23, 24. On the second lateral side 25 is a second lateral sidewall 25', a third connection tab 23 protrudes outwardly from the second lateral sidewall 25'. The third connection tab 23 is arranged oppositely of the first connection tab 21. A fourth connection tab 24 protrudes outwardly from the second lateral sidewall 25' adjacent the third connection tab 23. The third and fourth connection tabs protrude essentially parallel to the top surface 20 of the elongated securing rail 13. The first and second connection tabs 21 and 22, of a first lateral sidewall 26' are arranged to interlock with the third and fourth connection tab 23, 24 of an opposing second lateral sidewall 25' of an item, arranged to be interconnected to the elongated securing rail 13 when in use. As such, some design elements of the first and fourth connection tabs 21, 24 may be the same. The same may be said about the second and third connection tabs 22 and 23 of the elongated securing rail 13.

The first connection tab 21 is comprises a first protrusion, protruding outwardly from the elongated securing rail 13. The first connection tab 21 protrudes from a top portion of the first lateral sidewall 26' adjacent the first top surface portion 20" of the elongated securing rail 13. As such the first connection tab 21 may be seen as being an extension of the first top surface portion 20" of the elongated securing rail 13. The first protrusion 21 may also be described as an overhang extending from the first top surface portion 20" of the elongated securing rail 13. The first connection tab 21 has a thickness D1 smaller than the thickness D of the whole elongated securing rail 13.

On the underside surface 31 (see Fig. 3 and Fig. 4) of the first connection tab 21, the underside surface 31 being the surface opposite the top surface 20 of the elongated securing rail, is arranged a first engagement portion 32. The first engagement portion 32 comprises of a protrusion, protruding outwardly from the underside surface 31 of the first connection tab 21. The first engagement portion 32 extends, along a direction of the first lateral sidewall 26'. The first engagement portion 32 has a front surface 40 and a back surface 41 (See Fig. 6.) The back surface 41 is adjacent, but at a distance from the first lateral sidewall 26' of the elongated securing rail and the front surface 40 is adjacent an outer surface 43 of the connection tab 21. The front and back surfaces 40, 41 forms a triangular cross section together with a part of the underside surface 31 of the first connection tab 21 having a triangle base formed by the back surface 40. The first engagement portion 32 may have a different cross section shape such as a round-semi-circle, a rectangle or a trapezoid. The first engagement portion 32 extends in a direction parallel to the first lateral sidewall 26'. The first engagement portion 32 may be the same length as the length of the first connection tab 21. The first engagement portion 32 may also have a length being shorter than the length of the first connection tab 21. The back surface 40 of the first engagement portion 32 is arranged on a distance from the first lateral sidewall 26' as can be seen in fig. 6.

The second connection tab 22 of the elongated securing rail 13 is a protrusion, protruding from the lower portion of the first lateral sidewall 26' of the elongated securing rail 13. The first and second connection tab 21, 22 are joined together along a border 33, or stop surfaces, where a first connection tab 21 and an adjacent alternately arranged second connection tab 22 meet i.e. the first and the second connection tabs 21, 22 are connected to each other at their adjacent sides. This helps increasing the strength of an elongated securing rail 13 as well as increase the strength of the connection between the elongated securing rail 13 and an item. The thickness D2 of the second connection tab 22 together with the thickness D1 of the first connection tab 21 is essentially the same as the thickness D of the elongated securing rail 13. It is however, not limited to this. The lower surface 34 of the second connection tab 22 will face, and may abut the inner wall 4 or the floor 2 of the back space or cargo space 100 of a service vehicle 1 when in use. This helps with increasing the stability and rigidity of the connection between two connected items. The ratio between the thickness D1, D2 of the first and second connection tab may also differ. The thickness D1 of a first connection tab 21 may be larger than the thickness D2 of a second connection tab 22 as well as vice versa. The same goes for the ratio between the thickness of a third and fourth connection tab D3, Di. The second connection tab 22 has a recess or a cut out 44, in a direction from the upper surface towards the lower surface of the second connection tab 22. The recess 44 may go through the whole of the second connection tab 22. This creates a hole having an extended elongated shape, in the second connection tab 22. Or the recess 44 may go through only a part of the protrusion of the second connection tab 22 leaving a bottom portion of the recess 44. Leaving a recess 44 in the bottom of the second connection tab 22 increases the rigidity of the second connection tab 22. This will in turn improve the interlocking of an item to the elongated securing rail 13.

The third connection tab 23, arranged on the opposite side of the first connection tab 21, on the second lateral side 25, comprises a protrusion, protruding outwardly from the second lateral sidewall 25'. The third connection tab 23 further comprises a groove similar to the groove of the second connection tab 22 described above. This groove is a second engagement portion 36 having a locking or engaging function when an item is interconnected to the elongated securing rail 13. The second engagement portion 36 extends in the longitudinal direction of the elongated securing rail 13 and is arranged adjacent to the second lateral sidewall 25'. When the elongated securing rail 13 is interconnected, the second engagement portion 36, of the third connection tab 23, is engaging the locking element 32 of a matching first connection tab of an item preventing movement between the elongated securing rail 13 when interconnected to an item. The upper inner edge 45 (see Fig. 6) of the third connection tab 23 is rounded to make interconnecting of the elongated rail 13 to an item simplified. The upper inner edge 45 may also be chamfered. The third connection tab 23 of the elongated securing rail 13 comprises a protrusion, protruding from the lower portion of the second lateral sidewall 25' of the elongated securing rail 13. The third connection tab 23 further may have the same thickness D3 as the thickness D2 of the second connection tab 22. Fig 3 shows that the third connection tab 23 is not joined together along the border where adjacent fourth connection tabs 24 are alternately arranged as in the case with the first and second connection tabs 21, 22.

The fourth connection tab 24 is arranged adjacent the third connection tab 23 along the second lateral sidewall 25' of the elongated securing rail 13. The fourth connection tab 24 comprises a protrusion, protruding outwardly from a top portion of the second lateral sidewall 25' adjacent the top surface 20 of the elongated securing rail. As such the fourth connection tab 24 may be seen as being an extension of the top surface 20 of the elongated securing rail 13. The fourth connection tab 24 may also be described as an overhang extending from the top surface 20 of the elongated securing rail 13. The shape of the fourth connection tab 24 largely corresponds to the shape of the first connection tab 21. The fourth connection tab 24 however does not have a first engagement portion 32 as in the case with the first connection tab 21. The third connection tab 23 may however be designed as also comprising a first engagement portion 32 according to the first connection tab 21.The outer part of the fourth connection tab 24 in Fig. 6 has an outer thickness Do being smaller than the inner thickness Di of the inner part of the fourth connection tab 24 adjacent the second lateral sidewall 25'. This simplifies joining the second and fourth connection tabs 22, 24 when the elongated securing rail 13 is interconnected to an item. Fig. 3 further shows the elongated securing rail 13 comprising three first connection tabs 21, three second connection tabs 22, three third connection tabs 23 and three fourth connection tabs 24. However more connection tabs may be possible depending on the size of the elongated securing rail 13.

It should be noted that the first connection tab 21 alternatively may protrude at a lower portion of the first lateral sidewall 26' adjacent the bottom surface 35 (see Fig. 5.) of the elongated securing rail 13 and that the second connection tab 22 of the elongated securing rail may then protrude from a top portion 20 of the first lateral sidewall 26' of the elongated securing rail 13 (not shown). The third connection tab 23 of the elongated securing rail 13 will then protrude from the top portion 20 elongated securing rail 13 and the fourth connection tab 24 will then protrude outwardly adjacent the bottom surface 35 of the elongated securing rail 13, and locking element 32 of the first connection tab 21 will then be protruding towards the top surfaces 20 of the elongated securing rail, and the second engagement portion 36 of the third connection tab 23 will be facing the first engagement portion 32.

Dividing the top surfaces 20, into a first and a second top surface portion 20',20", of the elongated securing rail 13, is an undercut groove 29 extending in the elongation direction of the elongated securing rail 13. The undercut groove 29 can be used for fastening module units and increase the flexibility when fitting items to the vehicle 1.

Fig. 5 shows the underside of the elongated securing rail 13 comprising a bottom surface 35 comprising two adhesive grooves 37. The adhesive grooves 37 are adapted to be applied with adhesives prior to attaching the bottom surface 35 of the elongated securing rail 13 to an inner surface 2, 3, 4 of a back space or cargo space 100 of a service vehicle 1. The adhesive grooves 37 are extending in the elongation direction of the elongated securing rail 13. These adhesive grooves 37 increase the surface area of the elongated securing rail 13 thus increasing the area of the elongated securing rail 13 that the adhesive engage.

Fig. 6 shows a cross sectional view of the elongated securing rail 13 showing the first,second, third and fourth connection tabs 21, 22, 23, 24. The first engagement portion 32, of the first connection tab 21 has a triangular shape as described before. The shape of the first engagement portion 32 helps when an item is connected to the elongated securing rail 13 by allowing an item to be inserted at an angle. Once inserted the angle is reduced until the item is essentially being parallel to the elongated securing rail 13. Thus a matching third connection tab of an item engages the back surface 40 of the first engagement portion 32 of the elongated securing rail 13. This prevents any movement in a direction outwardly from the first lateral sidewall 26'. Fig.6 further shows a third and a fourth connection tab 23, 24. The third connection tab 23 has a second engagement portion 36 in the shape of a groove. Seen in Fig. 6 is also the fourth connection tab 24 protruding outwardly from the second lateral sidewall 25'of the elongated securing rail 13. Fig. 6 further shows additional adhesive grooves 37' arranged on the bottom surface 35 of the elongated securing rail 13 between the adhesive grooves 37 described previously.

Fig. 7 shows a panel securing system 70 comprising three items in the shape of three identical floor panels 71, 72, 73 and one elongated securing rail 13, wherein two floor panels 71, 72 are interconnected to the elongated securing rail 13, one of which is further connected to a third floor panel 73. The floor panels 71, 72, 73 together with the elongated securing rail 13 form a floor 75 being located in a plane P. The plane P has a normal, n, being perpendicular to the plane P, and extending in a direction from the surface of the floor, comprising the floor panels 71, 72, 73 and the elongated securing rail 13. A first and a second floor panel 72, 73 are interconnected to each other by first rail connection tabs 731 on the first floor panel 73 are being connected to third rail connection tabs 723 of the second floor panel 72 as well as second rail connection tabs 732 of the first floor panel 73 are being connected to fourth rail connection tabs 724 on the second floor panel 72. The second floor panel 72 is on an opposite side, from the side being connected to the first floor panel 73, connected to an elongated securing rail 13. The elongated securing rail 13 is interconnected to the second floor panel 72 in a similar way as the interconnection between the first and second floor panels 73, 72. The first and second rail connection tab 721, 722 on the second floor panel 72 is interconnected to third and fourth connection tabs 713, 714 on the second lateral side 25 of the elongated securing rail 13, preventing relative movement, between the second floor panel 72 and the elongated securing rail 13, in the plane P as well as in a direction along the normal n of the plane P. The elongated securing rail 13 and the second floor panel 72 may also be described as being prevented from moving along a first, second and third axis 101, 102, 103 as indicated by the plane P in Fig. 7. On the first lateral side 26 of the elongated securing rail 13 is a third floor panel 71 interconnected to the elongated securing rail 13. The first and second connection tabs 21, 22 on the elongated securing rail 13 are connected to the third and fourth rail connection tabs 713, 714 on the third floor panel 71.

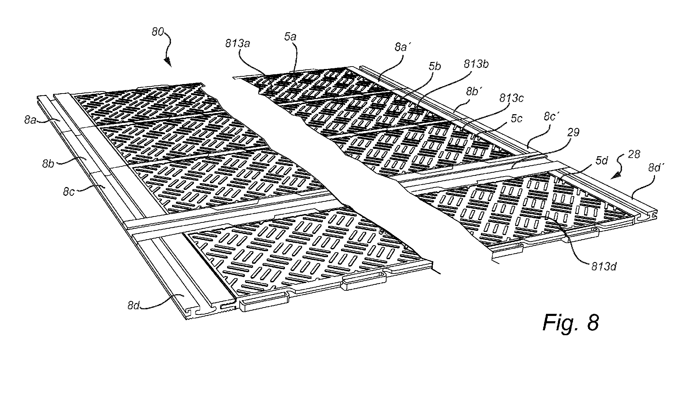

Fig. 8 shows a perspective view of an item securing system 80 comprising floor sections 813a-813d. The floor panel sections 813a-813b are interconnected as well as sections 813a-813b. Floor panel sections 813c and 813d are interconnected to an elongated securing rail 13. Each floor panel section 813a-813d comprises a floor panel 5a-5d as well as two fastening rails 8a-8d, 8a'-8d'. The fastening rails 8 are used for securing a floor panel section 813a-813d to the floor 2 of a service vehicle 1. As can be seen in the figure the elongated securing rail 13 is connected to two floor panel sections 813d and 813c, by being interconnected by connection tabs on the floors panels 5d, 5c. This enables the elongated securing rail to form a part of the floor 80. The connection between the floor panels 5c, 5f to the elongated securing rail 13 is done in the same way as the second and third floor panels 72, 71 are connected to the elongated securing rail 13 in Fig. 7 and will not be described in more detail. The elongated securing rail 13 may be secured to the floor 2 of the back space or cargo space 100 of the service vehicle 1 and may increase the securing of the floor 80 to the inner floor 2 which increases the security when for instance a crash event occurs. The elongated securing rail 13 comprises an undercut groove 29 which further increases the number of anchor point or fastening locations that can be used to fasten module units or items such as tools or equipments. The floor panel sections 813a-813d can be stacked on top of each other (not shown) and transported in a simple manner to be assembled in situ before a floor 80 is arranged in the back space or cargo space 100 of a service vehicle 1. This increases the modularity and simplifies installing a floor 80 in a vehicle as well as enables the floor panel sections 813a-813d to be pre-manufactured, off location.

The disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An elongated securing rail (13, 214) for securing items in a back space or cargo space (100) of a service vehicle (1), said elongated securing rail (13, 214) comprising:
a bottom surface (35) adapted to be arranged to a wall (4) or a floor (2) or a roof (3) of said back space or cargo space (100) of said service vehicle (1) during use,
a top surface (20) adapted to face the inner space of said back space or cargo space (100) of said service vehicle (1) during use and said top surface (20) is arranged at a distance from said bottom surface (35), and
at least a first lateral side (26) connecting said top surface (20) with said bottom surface (35), wherein
said elongated securing rail (13, 214) is **characterized by**:
a first connection tab (21) at said first lateral side (26), said first connection tab (21) being provided with a first engagement portion (32),
wherein said first connection tab (21) on said first lateral side (26) is adapted to overlap a portion of an item (71 ,72 ,73, 5d, 5c, 212a-212d) , and
said first engagement portion (32) of said first connection tab (21) is adapted to be connected to a matching engagement portion of said item, preventing, in at least one geometrical plane, relative movement between said elongated securing rail (13, 214) and said item.

2. An elongated securing rail (13, 214) according to claim 1, comprising a second connection tab (22) adjacent to said first connection tab (21) at said first lateral side (26),
wherein said first connection tab (21) is arranged close to or forms a part of said top surface (20) of said elongated securing rail (13, 214) and said second connection tab (22) is arranged close to or forms a part of said bottom surface (35) of said elongated securing rail (13, 214), or
said second connection tab (22) on said elongated securing rail (13, 214) is arranged close to or forms part of said top surface (20) of said elongated securing rail (13, 214) and said first connection tab (21) on said elongated securing rail (13, 214) is arranged close to or forms part of said bottom surface (35) of said elongated securing rail (13, 214).

3. An elongated securing rail (13, 214) according to claim 1 or 2, wherein said first engagement portion (32) on said first connection tab (21) of said elongated securing rail (13, 214) is a protrusion which extends in a direction towards said bottom surface (35) or said top surface (20) of said elongated securing rail (13, 214).

4. An elongated securing rail (13, 214) according to claim 1 or 2, wherein said first engagement portion (32) on said first connection tab (21) of said elongated securing rail (13, 214) is a groove which extends in a direction along said first lateral side (26) of said elongated securing rail (13, 214).

5. An elongated securing rail (13, 214) according claim 2 or any of claims 3-4 when dependant on claim 2, wherein said elongated securing rail (13, 214) comprises at least two first connection tabs (21) at said first lateral side (26), and said second connection tab (22) is arranged between said two first connection tabs (21), wherein a recess (38) extends from said top surface (20) or said bottom surface (35) to said second connection tab (22) between said two first connection tabs (21), wherein said recess (38) is adapted to receive and overlap a portion of said item and prevent, in at least one geometrical plane, relative movement between said elongated securing rail and said item.

6. An elongated securing rail (13, 214) according to claim 2 or claim 3 when dependant on claim 2, wherein said elongated securing rail (13, 214) comprises at least two second connection tabs (22) at said first lateral side (26), and said first connection tab (21) is arranged between said two second connection tabs (22), wherein a recess (38) extends from said top surface (20) or said bottom surface (35) to said first connection tab (21) between said two second connection tabs (22), wherein said recess is adapted to receive and overlap a portion of said item and prevent relative, in at least one geometrical plane, movement between said elongated securing rail (13, 214) and said item.

7. An elongated securing rail (13, 214) according to any one of the preceding claims, said item is a first item (71, 5d, 212a, 212b), wherein said elongated securing rail (13, 214) further comprising a second lateral side (25) comprising
a third connection tab (23) at said second lateral side (25), said third connection tab (24) being provided with a second engagement portion (36), and
a fourth connection tab (24) at said second lateral side (25),
wherein said third and fourth connection tabs (23, 24) on said second lateral side (26) are adapted to overlap a portion of an second item (72, 5c, 212c, 212d), and
wherein said second engagement portion (36) of said third connection tab (23) is adapted to be connected to a matching engagement portion of said second item, preventing, in at least one geometrical plane, relative movement between said elongated securing rail (13, 214) and said second item.

8. An elongated securing rail (13, 214) according to claim 7, wherein said fourth connection tab (24) is arranged close to or forms part of said top surface (20) of said elongated securing rail (13, 214) and said third connection tab (23) is arranged close to or forms part of said bottom surface (35) of said elongated securing rail (13, 214), or
said third connection tab (23) on said elongated securing rail (13, 214) is arranged close to or forms part of said top surface (20) of said elongated securing rail (13, 214) and said fourth connection tab (24) on said elongated securing rail (13, 214) is arranged close to or forms part of said bottom surface (35) of said elongated securing rail (13, 214).

9. An elongated securing rail (13, 214) according to claim 7 or 8, wherein said second engagement portion (36) on said third connection tab (23) of said elongated securing rail (13, 214) is a groove in said third connection tab (23).

10. An elongated securing rail (13, 214) according to any one of the claims 7-9, wherein said elongated securing rail (13, 214) comprises at least two fourth connection tabs (24) at said second lateral side (25), and said third connection tab (23) is arranged between said two fourth connection tabs (24), wherein a recess (38') extends from said top surface (20) or said bottom surface (35) to said third connection tab (23) between said two fourth connection tabs (24), wherein said recess (38') is adapted to receive and overlap a portion of a first item and prevent relative, in at least one geometrical plane, movement between said elongated securing rail (13, 214) and said first item.

11. An elongated securing rail (13, 214) according to any one of the claims 7-10, wherein said elongated securing rail (13, 214) comprises at least two third connection tabs (23) at said second lateral side (25), and said fourth connection tab (24) is arranged between said two third connection tabs (23), wherein a recess (38') extends from said top surface (20) or said bottom surface (35) to said fourth connection tab (24) between said two third connection tabs (23), wherein said recess is adapted to receive and overlap a portion of a first item and prevent relative, in at least one geometrical plane, movement between said elongated securing rail (13, 214) and said first item.

12. An elongated securing rail (13, 214) according to any preceding claim, wherein said first and second connection tabs (21, 22) are alternately disposed along said first lateral side (26) of said elongated securing rail (13, 214) and said third and fourth connection tabs (23, 24) are alternately disposed along said second lateral side (25) of said elongated securing rail (13, 214).

13. An item securing system (70) comprising an elongated securing rail (13, 214) according to any preceding claim, comprising an item, said item comprising:
at least one first and second rail connection tab, arranged on a first lateral side of said item,
wherein said first and second rail connection tabs on said second item matches said third and fourth connection tabs (23, 24) on said elongated securing rail (13, 214) and are adapted to being connected to said third and fourth connection tab (23, 24) on said elongated securing rail (13, 214),
for preventing relative, in at least one geometrical plane, movement between said elongated securing rail (13, 214) and said item.

14. An item securing system (70) comprising an elongated securing rail (13, 214) according to claim 7 or claim 8-13 in combination with claim 7,
comprising an item, said item comprising:
at least one third and fourth rail connection tabs, arranged on a second lateral side of said second item,
wherein said third and fourth rail connection tabs on said second item matches said first and second connection tabs (21, 22) on said elongated securing rail (13, 214) and are adapted to being connected to said first and second connection tab (21, 22) on said elongated securing rail (13, 214),
for preventing relative, in at least one geometrical plane, movement between said elongated securing rail (13, 214) and said item.

15. An item securing system (70) according to claim 13 or 14, wherein said item is a panel such as a floor panel (71, 72, 73, 5, 5a-5d) or a wall panel (212a-212d).
